# EUROPÄISCHE PATENTANMELDUNG

(11) **EP 4 790 879 A1**
(43) Veröffentlichungstag der Anmeldung: **12.08.2026**
(21) Anmeldenummer: 25156956.2
(22) Anmeldetag: 10.02.2025
(51) Int. Cl.: H02K 1/32, H02K 7/18, H02K 9/06, H02K 21/14

(54) **GENERATORSEGMENT, GENERATOR, WINDENERGIEANLAGE UND VERWENDUNG EINES DROSSELSTOPFENS IN EINEM GENERATORSEGMENT ODER EINEM GENERATOR**

(71) Anmelder: Wobben Properties GmbH, 26607 Aurich (DE)
(72) Erfinder: Busemann, Steffen, 26842 Ostrhauderfehn (DE); Pel, Douwe Jan, 6714 GN EDE (NL); de Roo, Willem, 7316 NJ APELDOORN (NL)
(74) Vertreter: Eisenführ Speiser

(57) **Zusammenfassung**

Generatorsegment (1) für einen Generator (103) einer Windenergieanlage (100), umfassend: ein Statorsegment (10), aufweisend einen radial innenliegenden Statorflansch (11) zur Befestigung des Statorsegments (10) an einem Stator-Grundkörperflansch (30) einer Lagereinheit (40), ein radial außenliegendes Spulenträgersegment (12) mit einer ringförmigen oderteilringförmigen Geometrie und einen Statorsegment-Tragabschnitt (13), der sich in einer Radialrichtung (R) zwischen dem radial innenliegenden Statorflansch (11) und dem radial außenliegenden Spulenträgersegment (12) erstreckt, wobei sich das radial außenliegende Spulenträgersegment (12) in der Radialrichtung (R) zwischen einer Stator-Außenumfangsfläche (12A) und einer Stator-Innenumfangsfläche (12I) erstreckt, wobei die Stator-Außenumfangsfläche (12A) und die Stator-Innenumfangsfläche (12I) jeweils eine Haupterstreckungsrichtung orthogonal zur Radialrichtung (R) aufweisen, und an der Stator-Innenumfangsfläche (12I) eine Statorspuleneinheit (14) mit mehreren Statorspulen angeordnet ist, und ein Rotorsegment (20), das in Radialrichtung (R) innerhalb des Statorsegments (10) angeordnet ist, das Rotorsegment (20) aufweisend einen radial innenliegenden Rotorflansch (21) zur Befestigung des Rotorsegments (20) an einem Rotor-Grundkörperflansch (41) der Lagereinheit (40), ein radial außenliegendes Magnetträgersegment (22) mit einer ringförmigen oder teilringförmigen Geometrie und einen Rotorsegment-Tragabschnitt (23), der sich in der Radialrichtung (R) zwischen dem radial innenliegenden Rotorflansch (21) und dem radial außenliegenden Magnetträgersegment (22) erstreckt, wobei sich das radial außenliegende Magnetträgersegment (22) in der Radialrichtung (R) zwischen einer Rotor-Außenumfangsfläche (22A) und einer Rotor-Innenumfangsfläche (22I) erstreckt, wobei die Rotor-Außenumfangsfläche (22A) und die Rotor-Innenumfangsfläche (22I) jeweils eine Haupterstreckungsrichtung orthogonal zur Radialrichtung (R) aufweisen, und in der Axialrichtung (A) zwischen einer ersten Rotor-Stirnseite (S1) und einer zweiten Rotor-Stirnseite (S2) erstreckt, und an der Rotor-Außenumfangsfläche (22A) eine Magneteinheit (24) mit mehreren Magneten angeordnet ist, dadurch gekennzeichnet, dass die Magneteinheit (24) beabstandet zu der Rotor-Außenumfangsfläche (22A) angeordnet ist, so dass zwischen der Magneteinheit (24) und der Rotor-Außenumfangsfläche (22A) mindestens ein Magnetluftkühlungsspalt (25) ausgebildet wird, der sich zwischen mindestens einer Magnetluftkühlungsspalt-Auslassöffnung (26) und mindestens einer Magnetluftkühlungsspalt-Einlassöffnung (27) erstreckt.

## Beschreibung

Die Erfindung betrifft ein Generatorsegment für einen Generator einer Windenergieanlage. Ferner betrifft die Erfindung einen Generator für eine Windenergieanlage sowie eine Windenergieanlage. Weiterhin betrifft die Erfindung eine Verwendung eines Drosselstopfens in einem Generatorsegment oder einem Generator.

Eine Windenergieanlage, auch Windkraftanlage genannt, wandelt mittels eines Generators Windkraft bzw. Windenergie, d.h. mechanische Energie, in elektrische Energie. Bei den Windenergieanlagen wird zwischen horizontalen Windenergieanlagen, auch Horizontalachser genannt, bei denen sich die Drehachse im Wesentlichen horizontal erstreckt, und vertikalen Windenergieanlagen, auch Vertikalachser genannt, bei denen sich die Drehachse im Wesentlichen vertikal erstreckt, unterschieden. Diese Windenergieanlagen werden entweder an Land (Onshore-Windenergieanlagen) oder auf offener See (Offshore-Windenergieanlagen) installiert.

Ein Generator ist eine Maschine oder Anlage, welche durch elektromagnetische Induktion mechanische Energie in elektrische Energie wandelt. Hierzu weist der Generator einen Rotor und einen Stator auf. Der Rotor ist die sich drehende Einheit des Generators, der Permanentmagneten oder ein elektromagnetisches Erregersystem umfasst. Der Stator ist die feststehende Einheit des Generators, an dem üblicherweise Induktionsspulen angeordnet sind. Durch die Drehung des Rotors wirkt auf den Stator bzw. die Spulen des Stators ein wechselndes Magnetfeld der Permanentmagneten oder des elektromagnetischen Erregersystems, welches den Spulen eine entsprechende elektrische Spannung induziert.

Bei einer horizontalen Windenergieanlage ist der Rotor des Generators mit Rotorblättern, üblicherweise mit drei Rotorblättern, die an einer Nabe befestigt sind, über eine Rotorwelle gekoppelt. Für die Energieerzeugung liegt die Nabe bzw. die Drehachse des Generators der Windenergieanlage häufig 90 m bis 150 m oberhalb der Gelände- bzw. Meeresoberfläche. Selbstverständlich können die Nabenhöhen auch oberhalb von 150 m liegen oder darunter. Dementsprechend weisen die Windenergieanlagen Türme mit einer entsprechenden Turmhöhe auf.

Die Wandlung von mechanischer Energie in elektrische Energie geht mit einer Erwärmung des Generators einher. Die Erwärmung hat verschiedene elektrische Verluste als Ursachen. Die Ursachen sind im Wesentlichen auf den ohmschen Widerstand elektrischer Leiter sowie Hysterese- und Wirbelstromverluste durch das wechselnde Magnetfeld zurückzuführen. Sofern der Generator fremderregt ist, kann das Erregersystem aufgrund dieser Ursachen ebenfalls Wärme induzieren.

Diese elektrischen Verluste wirken sich negativ auf den Wirkungsgrad des Generators aus. Hierbei hat die Temperatur der Spulen am Stator in aller Regel einen größeren Einfluss auf den Wirkungsgrad des Generators als die Temperatur des Rotors bzw. der am Rotor befestigten Magnete.

Darüber hinaus kann die Wärmeentwicklung im Generator dazu führen, dass die Temperatur des Generators steigt und der für den Betrieb einer Windenergieanlage zulässige Temperaturbereich nicht eingehalten werden kann. Diese Temperaturerhöhung kann wiederum wesentlich von der Temperaturentwicklung des Rotors bzw. der am Rotor befestigten Magnete beeinflusst sein und weniger von der Temperatur des Stators bzw. der Spulen des Stators.

Wenn die Temperatur des Generators außerhalb eines für den Betrieb zulässigen Temperaturbereichs liegt, beispielsweise eine zulässige Maximaltemperatur überschreitet, muss der Betrieb der Windenergieanlage gedrosselt werden, um die Temperaturanforderungen wieder zu erfüllen. Dies kann insbesondere bei heißen klimatischen Bedingungen oder bei höher gelegenen Standorten der Windenergieanlage schneller erforderlich werden. In der Folge sinkt die jährliche Energieproduktion oder die angestrebte jährliche Energieproduktion, welche für einen wirtschaftlichen Betrieb der Windenergieanlage erforderlich ist.

Entsprechende Maßnahmen zur Kühlung von Generatoren sind allgemein bekannt. Insbesondere in Windenergieanlagen ist es bekannt, Generatoren mittels Luftkühlung zu kühlen. Hierbei wird mit einem Gebläse ein Luftstrom erzeugt, der zu Kühlungszwecken innerhalb des Generators bzw. durch den Generator hindurchgeführt wird. Ebenso ist es bekannt, Wasser oder Öl als Kühlmittel zu verwenden.

Zur Kühlung des Generators ist allerdings Energie erforderlich. Insofern reduziert eine Kühlung auch den Wirkungsgrad einer Windenergieanlage. Deshalb ist ein entsprechendes Kühlsystem für den Generator in einer solchen Weise auszulegen, dass einerseits der Wirkungsgrad der Windenergieanlage optimal ist und andererseits die Windenergieanlage bzw. der Generator der Windenergieanlage innerhalb des zulässigen Temperaturbereichs betrieben und eine gleichmäßige(re) Temperaturverteilung innerhalb des Generators gewährleistet werden kann. Hierbei spielt bei der Auslegung des Kühlsystems nicht nur die konkrete Ausgestaltung des Generators eine Rolle, sondern auch dessen Größe sowie die klimatischen Bedingungen am Aufbau- bzw. Betriebsort der jeweiligen Windenergieanlage.

Nach Kenntnis der Erfinder sind keine Lösungen bekannt, die eine schnelle, einfache und kostengünstige Anpassung des Kühlsystems eines Generators an die klimatischen Bedingungen am Installationsortes der Windenergieanlage ermöglichen. Insbesondere sind nach Kenntnis der Erfinder keine Lösungen bekannt, die eine schnelle, einfache und kostengünstige Anpassung des Kühlsystems eines Generators unter Berücksichtigung des Wirkungsgrades und des für den Betrieb der Windenergieanlage zulässigen Temperaturbereichs unabhängig vom Installationsort an die klimatischen Bedingungen des Installationsortes der Windenergieanlage ermöglichen.

Der Erfindung liegt daher die Aufgabe zu Grunde, eine verbesserte Lösung bereitzustellen. Insbesondere ist eine Aufgabe der vorliegenden Erfindung, ein verbessertes Generatorsegment, einen verbesserten Generator und eine verbesserte Windenergieanlage bereitzustellen. Ferner ist es insbesondere eine Aufgabe der vorliegenden Erfindung, ein Generatorsegment, einen Generator und eine Windenergieanlage bereitzustellen, welche eine schnelle, einfache und kostengünstige Anpassung des Kühlsystems eines Generators unter Berücksichtigung des Wirkungsgrades und des für den Betrieb der Windenergieanlage zulässigen Temperaturbereichs unabhängig vom Installationsort an die klimatischen Bedingungen des Installationsortes der Windenergieanlage ermöglichen.

Diese Aufgabe wird gemäß einem ersten Aspekt der Erfindung durch Generatorsegment nach Anspruch 1 gelöst. Dieses Generatorsegment ist ein Generatorsegment für einen Generator einer Windenergieanlage.

Sofern nicht ausdrücklich abweichend ausgeführt, sind Angaben zu der Axialrichtung, der Umfangsrichtung und der Radialrichtung in der Beschreibung in Bezug auf die Drehachse des Generators zu verstehen. Die Axialrichtung entspricht einer Richtung parallel, d.h. entlang der Drehachse. Die Umfangsrichtung entspricht einer Richtung im Wesentlichen tangential bzw. parallel zu der Drehachse. Die Radialrichtung entspricht einer Richtung radial zu der Drehachse.

Vorzugsweise umfasst ein Generator ein oder mehrere Generatorsegmente oder besteht aus einem oder mehreren Generatorsegmenten. Ein Generator, der mehrere Generatorsegmente umfasst oder aus mehreren Generatorsegmenten besteht, ist auch als segmentierter Generator bekannt.

Bei einem Generator, der aus einem einzigen Generatorsegment besteht oder ein einziges Generatorsegment umfasst, erstreckt sich das Generatorsegment in Umfangsrichtung um 360°. Insbesondere ist zu verstehen, dass ein Generator, der aus einem einzigen Generatorsegment besteht oder ein einziges Generatorsegment umfasst, bezüglich des Generatorsegments einstückig oder einteilig ausgebildet ist.

Der Generator für eine Windenergieanlage umfasst vorzugsweise zwei oder mehrere Generatorsegmente. Die zwei oder mehreren Generatorsegmente sind bevorzugt ringförmig oder teilringförmig angeordnet. Insbesondere sind die zwei oder mehr Generatorsegmente koaxial zu einer Drehachse des Generators angeordnet. Insbesondere umfasst der Generator einen Rotor und einen Stator. Der Rotor umfasst ein, zwei oder mehrere Rotorsegmente. Der Stator umfasst ein, zwei oder mehrere Statorsegmente.

Das jeweilige Generatorsegment bzw. das jeweilige Rotorsegment und/oder das jeweilige Statorsegment sind bezogen auf die Drehachse in einer Umfangsrichtung vorzugsweise teilringförmig oder ringförmig ausgebildet. Insbesondere weisen das Generatorsegment bzw. das Rotorsegment und/oder das Statorsegment eine teilringförmige oder ringförmige Geometrie auf. Ein Generatorsegment bzw. ein Rotorsegment und/oder ein Statorsegment, welches entsprechend teilringförmig oder ringförmig ausgebildet ist oder eine teilringförmige oder ringförmige Geometrie aufweist, erstreckt sich in der Umfangsrichtung mit einem bestimmten Bogengrad zwischen einer ersten und zweiten Trennschnittstelle.

Vorzugsweise erstrecken sich die zwei oder mehr Generatorsegmente bzw. die zwei oder mehr Rotorsegmente und/oder zwei oder mehr Statorsegmente mit demselben Bogengrad in der Umfangsrichtung. Insbesondere erstrecken sich die Generatorsegmente bzw. die Rotor- und/oder Statorsegmente in Abhängigkeit der Anzahl der jeweiligen Segmente nach folgender Formel: 360°/(Anzahl der Segmente). Hiernach erstrecken sich beispielsweise die Generatorsegmente eines Generators, der zwei Generatorsegmente umfasst, in Umfangsrichtung jeweils um 180°, bei drei Generatorsegmenten wären es 120°, bei vier Generatorsegmenten wären es 90° usw. Dies kann entsprechend für die Rotorsegmente und/oder Statorsegmente gelten.

Es kann auch bevorzugt sein, dass die Generatorsegmente aus denen ein Generator zusammengesetzt wird, sich in der Umfangsrichtung mit einem unterschiedlichen Bogengrad erstrecken. Beispielsweise kann ein Generator aus drei Generatorsegmenten gebildet sein. Bei einem solchen Generator kann sich beispielsweise ein erstes Generatorsegment in der Umfangsrichtung mit 180°, ein zweites Generatorsegment mit 120° und ein drittes Generatorsegment mit 60° erstrecken. Beliebig andere Erstreckungen in der Umfangsrichtung der Generatorsegmente sind denkbar, sofern sie zusammengesetzt in der Umfangsrichtung eine Erstreckung von 360° ergeben. Die Ausführungen zu dem Generatorsegment können entsprechend für ein Rotorsegment eines Rotors und/oder ein Statorsegment eines Stators gelten.

Die erste und zweite Trennschnittstelle erstrecken sich im Wesentlichen orthogonal zu der Umfangsrichtung. Insbesondere definieren die erste und zweite Trennschnittstelle eine erste und zweite Trennschnittstellenebene, innerhalb derer sich die Drehachse erstreckt. Insbesondere erstrecken sich die erste und/oder zweite Trennschnittstelle derart, dass die erste und/oder zweite Trennschnittstellenebene sich in Bezug zu der Drehachse in einer Radialrichtung erstrecken. Insbesondere schneiden sich die erste und/oder zweite Trennschnittstellenebene, die sich in Bezug zu der Drehachse in der Radialrichtung erstrecken, in einer Achse, die die Drehachse ist oder definiert. Insbesondere liegt die Drehachse in der ersten und/oder zweiten Trennschnittstellenebene, die sich in Bezug zu der Drehachse in der Radialrichtung erstrecken.

Die erste und/oder zweite Trennschnittstelle eines Generatorsegments weist eine Verbindungsvorrichtung auf. Die Verbindungsvorrichtung an der ersten und/oder zweiten Trennschnittstelle ist dazu ausgebildet, benachbarte Generatorsegmente, die zu einem Generator angeordnet sind, miteinander zu verbinden. Die Verbindungsvorrichtung der ersten und/oder zweiten Trennschnittstelle ist insbesondere dazu ausgebildet, benachbarte Generatorsegmente mechanisch zu verbinden. Die mechanische Verbindung kann als kraftschlüssige und/oder stoffschlüssige und/oder formschlüssige Verbindung ausgebildet sein. Bevorzugt weisen die erste und/oder zweite Trennschnittstelle einen Flanschanschluss und/oder eine Schraubverbindung als Verbindungsvorrichtung auf zur Befestigung in der Umfangsrichtung benachbarter Generatorsegmente. Die Ausführungen zu dem Generatorsegment können entsprechend für ein Rotorsegment eines Rotors und/oder ein Statorsegment eines Stators gelten.

Vorzugsweise ist der Generator als Innenläufer ausgebildet. Bei einem als Innenläufer ausgebildeten Generator befindet sich der Stator gegenüber dem Rotor in Bezug zu der Drehachse in der Radialrichtung außenliegend. Üblicherweise umschließt bei einem als Innenläufer ausgebildeten Generator dessen radial innenliegender Rotor den radial außenliegenden Stator. Vorliegend umfasst das Generatorsegment ein Statorsegment und ein Rotorsegment. Das Rotorsegment ist hierbei in Radialrichtung innerhalb des Statorsegments angeordnet.

In dem Betriebszustand der Windenergieanlage ist der Generator insbesondere an einer Lagereinheit befestigt. Die Lagereinheit weist ein feststehendes Lagerteil und ein drehendes bzw. drehbares Lagerteil auf. Das drehbare Lagerteil ist gegenüber dem feststehenden Lagerteil um die Drehachse mittels Lagerelementen, beispielsweise Kugellagern, Wälzlagern, Tonnenlagern oder dergleichen drehbar gelagert. An dem feststehenden Lagerteil ist in dem Betriebszustand der Stator befestigt. An dem drehbaren Lagerteil ist in dem Betriebszustand der Rotor befestigt. Zur Befestigung des Stators weist die Lagereinheit an dem feststehenden Lagerteil vorzugsweise einen Stator-Grundkörperflansch auf. Zur Befestigung des Rotors weist die Lagereinheit an dem drehbaren Lagerteil vorzugsweise einen Rotor-Grundkörperflansch auf.

Das Statorsegment weist einen radial innenliegenden Statorflansch zur Befestigung des Statorsegments an dem Stator-Grundkörperflansch der Lagereinheit, ein radial außenliegendes Spulenträgersegment mit einer ringförmigen oder teilringförmigen Geometrie und ein Statorsegment-Tragabschnitt, der sich in einer Radialrichtung zwischen dem radial innenliegenden Statorflansch und dem radial außenliegenden Spulenträgersegment erstreckt, auf.

Vorzugsweise ist das Statorsegment oder der Stator topfförmig ausgebildet. Insbesondere ist es bevorzugt, dass das Spulenträgersegment im Wesentlichen zylinderförmig oder als Teilabschnitt eines Zylinders ausgebildet ist. Der Statorsegment-Tragabschnitt ist vorzugsweise plattenförmig ausgebildet. Insbesondere ist der Statorsegment-Tragabschnitt kegelförmig oder kegelstumpfförmig ausgebildet. Ferner kann es bevorzugt sein, dass der Statorsegment-Tragabschnitt pyramidenförmig oder pyramidenstumpfförmig ausgebildet ist.

Es ist vorgesehen, dass sich das radial außenliegende Spulenträgersegment in der Radialrichtung zwischen einer Stator-Außenumfangsfläche und einer Stator-Innenumfangsfläche erstreckt, wobei die Stator-Außenumfangsfläche und die Stator-Innenumfangsfläche jeweils eine Haupterstreckungsrichtung orthogonal zur Radialrichtung aufweisen. Es ist vorgesehen, dass an der Stator-Innenumfangsfläche eine Statorspuleneinheit mit mehreren Statorspulen angeordnet ist. Die Statorspulen sind beispielsweise Formspulen, insbesondere Formspulen aus Aluminium.

Vorzugsweise ist das Statorsegment eine Stahlkonstruktion. Insbesondere besteht das Statorsegment aus Stahl oder das Statorsegment umfasst Stahl.

Das Rotorsegment weist einen radial innenliegenden Rotorflansch zur Befestigung des Rotorsegments an dem Rotor-Grundkörperflansch der Lagereinheit, ein radial außenliegendes Magnetträgersegment mit einer ringförmigen oder teilringförmigen Geometrie und einen Rotorsegment-Tragabschnitt, der sich in der Radialrichtung zwischen dem radial innenliegenden Rotorflansch und dem radial außenliegenden Magnetträgersegment erstreckt, auf.

Der Rotorsegment-Tragabschnitt weist bevorzugt eine pyramidenförmige oder pyramidenstumpfförmige Form auf. Ferner kann es bevorzugt sein, dass der Rotorsegment-Tragabschnitt kegelförmig oder kegelstumpfförmig ausgebildet ist. Vorzugsweise weist der Rotortragabschnitt eine sich in Radialrichtung verändernde Breite in Axialrichtung auf. Insbesondere ist der Rotortragabschnitt an seiner radial außenliegenden Seite breiter als an seiner radial innenliegenden Seite.

Es ist vorgesehen, dass sich das radial außenliegende Magnetträgersegment in der Radialrichtung zwischen einer Rotor-Außenumfangsfläche und einer Rotor-Innenumfangsfläche erstreckt, wobei die Rotor-Außenumfangsfläche und die Rotor-Innenumfangsfläche jeweils eine Haupterstreckungsrichtung orthogonal zur Radialrichtung aufweisen, und in der Axialrichtung zwischen einer ersten Rotor-Stirnseite und einer zweiten Rotor-Stirnseite erstreckt. Vorzugsweise ist das Magnetträgersegment ringförmig oder teilringförmig ausgebildet. Insbesondere ist das Magnetträgersegment als Hohlzylinder oder Abschnitt eines Hohlzylinders ausgebildet. Vorzugsweise ist das Magnetträgersegment ein Stahlblech oder umfasst ein Stahlblech.

Vorzugsweise ist das Rotorsegment eine Stahlkonstruktion. Insbesondere besteht das Rotorsegment aus Stahl oder das Rotorsegment umfasst Stahl.

Das Rotorsegment und das Statorsegment sind in der Radialrichtung vorzugsweise mit einem Luftspalt zueinander beabstandet angeordnet. Insbesondere sind der Rotor und der Stator in der Radialrichtung mit einem Luftspalt zueinander beabstandet angeordnet. Insbesondere erstreckt sich der Luftspalt zwischen einer Stator-Innenumfangsfläche und einer Rotor-Außenumfangsfläche. Insbesondere bildet eine Magneteinheit des Rotors die Rotor-Außenumfangsfläche und ein Spulenträgersegment und/oder daran angeordnete Spuleneinheiten eine Stator-Innenumfangsfläche.

Der Luftspalt erstreckt sich in der Axialrichtung mit einer Luftspaltbreite und in der Umfangsrichtung mit einer Luftspaltlänge. Insbesondere erstreckt sich der Luftspalt in der Axialrichtung über eine Breite des Rotorsegments und/oder des Statorsegments. Insbesondere erstreckt sich der Luftspalt in der Axialrichtung über eine Breite des Stators und/oder des Rotors. Insbesondere erstreckt sich der Luftspalt in der Axialrichtung über die Breite der Aktivteile des Rotorsegments und/oder des Statorsegments. Insbesondere erstreckt sich der Luftspalt in der Axialrichtung über die Breite der Aktivteile des Stators und/oder des Rotors. Die Aktivteile des Rotors bzw. Rotorsegments umfassen insbesondere die an einem Rotor-Blechpaket und/oder einem Magnetträgersegment befestigte Magneteinheiten. Die Aktivteile des Stators bzw. des Statorsegments umfassen vorzugsweise die an einem Spulenträgersegment angeordneten Spuleneinheiten.

In der Radialrichtung weist der Luftspalt eine Höhe von mindestens 5 mm, 10 mm, 15 mm oder 20 mm und/oder maximal von 50 mm, 40 mm, 30 mm, 20 mm, 10 mm oder 5 mm auf. Insbesondere beträgt die Höhe des Luftspalts im Wesentlichen 12 mm. In der Axialrichtung weist der Luftspalt eine Breite von mindestens 100 mm, 200 mm, 300 mm, 400 mm, 500 mm, 600 mm, 700 mm, 800 mm, 900 mm, 1000 mm, 1200 mm, 1400 mm und mehr und/oder maximal 2000 mm, 1800 mm, 1600 mm, 1400 mm, 1200 mm, 1000 mm, 900 mm, 800 mm, 700 mm, 600 mm, 500 mm, 400 mm oder weniger auf.

Ergänzend ist vorgesehen, dass an der Rotor-Außenumfangsfläche eine Magneteinheit mit mehreren Magneten angeordnet ist.

Die Magneteinheit ist beabstandet zu der Rotor-Außenumfangsfläche angeordnet, so dass zwischen der Magneteinheit und der Rotor-Außenumfangsfläche mindestens ein Magnetluftkühlungsspalt ausgebildet wird, der sich zwischen mindestens einer Magnetluftkühlungsspalt-Auslassöffnung und mindestens einer Magnetluftkühlungsspalt-Einlassöffnung erstreckt.

Vorzugsweise ist die Magneteinheit mittels Befestigungsstegen an dem Magnetträgersegment befestigt. Die Befestigungsstege sind vorzugsweise in Umfangsrichtung beabstandet angeordnet. Es kann vorgesehen sein, dass die Befestigungsstege in Umfangsrichtung luftdurchlässig ausgebildet sind. Alternativ kann es bevorzugt sein, dass die Befestigungsstege in Umfangsrichtung luftundurchlässig ausgebildet sind. Insbesondere kann es bevorzugt sein, dass zwei in Umfangsrichtung benachbart angeordnete Befestigungsstege den Magnetluftkühlungsspalt in Umfangsrichtung begrenzen.

Insbesondere kann es bevorzugt sein, dass zwei in Umfangsrichtung benachbart angeordnete Befestigungsstege den Magnetluftkühlungsspalt in Umfangsrichtung gegenüber der Umgebung und/oder einen in Umfangsrichtung benachbart angeordneten Magnetluftkühlungsspalt abdichten.

Vorzugsweise ist der Magnetluftkühlungsspalt ringförmig oder teilringförmig ausgebildet.

Der Magnetluftkühlungsspalt erstreckt sich in der Axialrichtung mit einer Magnetluftkühlungsspaltbreite und in der Umfangsrichtung mit einer Magnetluftkühlungsspaltlänge. Insbesondere erstreckt sich der Magnetluftkühlungsspalt in der Axialrichtung über eine Breite des Rotorsegments. Insbesondere erstreckt sich der Magnetluftkühlungsspalt in der Axialrichtung über eine Breite des Rotors. Insbesondere erstreckt sich der Magnetluftkühlungsspalt in der Axialrichtung über die Breite der Aktivteile des Rotorsegments. Insbesondere erstreckt sich der Magnetluftkühlungsspalt in der Axialrichtung über die Breite der Aktivteile des Rotors. Vorzugsweise erstreckt sich der Magnetluftkühlungsspalt in der Axialrichtung über die Breite des Magnetträgersegments und/oder der Magneteinheit.

Der Magnetluftkühlungsspalt erstreckt sich in Radialrichtung zwischen einer Magnetluftkühlungsspalt-Außenumfangsfläche und einer Magnetluftkühlungsspalt-Innenumfangsfläche, die gegenüber der Magnetluftkühlungsspalt-Außenumfangsfläche in Radialrichtung innenliegend angeordnet ist. Vorzugsweise ist die Magneteinheit an der Magnetluftkühlungsspalt-Außenumfangsfläche angeordnet oder bildet diese aus. Vorzugsweise ist die Rotor-Außenumfangsfläche die Magnetluftkühlungsspalt-Innenumfangsfläche oder bildet diese aus.

Vorzugsweise ist der Magnetluftkühlungsspalt gegenüber der Magneteinheit abgedichtet. Insbesondere weist der Magnetluftkühlungsspalt keine Magnetluftkühlungsspalt-AuslassÖffnung an der Magnetluftkühlungsspalt-Außenumfangsfläche auf. Insbesondere ist der Magnetluftkühlungsspalt an der Magnetluftkühlungsspalt-Außenumfangsfläche gegenüber der Umgebung luftdicht verschlossen.

Vorzugsweise ist der Magnetluftkühlungsspalt gegenüber dem Magnetträgersegment oder der Rotor-Außenumfangsfläche des Magnetträgersegments abgedichtet. Insbesondere weist der Magnetluftkühlungsspalt keine Magnetluftkühlungsspalt-Auslassöffnung an der Magnetluftkühlungsspalt-Außenumfangsfläche und/oder Magnetluftkühlungsspalt-Innenumfangsfläche auf. Insbesondere ist der Magnetluftkühlungsspalt an der Magnetluftkühlungsspalt-Innenumfangsfläche gegenüber der Umgebung luftdicht verschlossen.

Vorzugsweise ist der Magnetluftkühlungsspalt an der ersten und/oder zweiten Rotor-Stirnseite gegenüber der Umgebung abgedichtet. Insbesondere weist der Magnetluftkühlungsspalt keine Magnetluftkühlungsspalt-Auslassöffnung an der ersten und/oder zweiten Rotor-Stirnseite auf. Insbesondere weist der Magnetluftkühlungsspalt keine Magnetluftkühlungsspalt-Einlassöffnung an der ersten und/oder zweiten Rotor-Stirnseite auf.

Vorzugsweise weist der Magnetluftkühlungsspalt als Öffnungen ausschließlich mindestens eine Magnetluftkühlungsspalt-Einlassöffnung und mindestens eine Magnetluftkühlungsspalt-Auslassöffnung auf. Insbesondere wird dem Magnetluftkühlungsspalt zur Kühlung des Generatorsegments ausschließlich über die mindestens eine Magnetluftkühlungsspalt-Einlassöffnung ein Kühlungsmedium, insbesondere Luft, zugeführt. Insbesondere wird zur Kühlung des Generatorsegments das erwärmte Kühlungsmedium, insbesondere erwärmte Luft, aus dem Magnetluftkühlungsspalt ausschließlich über die mindestens eine Magnetluftkühlungsspalt-Auslassöffnung abgeführt.

Vorzugsweise wird dem Magnetluftkühlungsspalt im Betrieb der Windenergieanlage ein Kühlungsmedium, insbesondere Umgebungsluft über die mindestens eine Magnetluftkühlungsspalt-Einlassöffnung zugeführt. Vorzugsweise weist das Kühlungsmedium eine Kühlungsmedium-Temperatur auf, die kleiner ist als die Umgebungstemperatur oder der Umgebungstemperatur entspricht, wenn es dem Magnetluftkühlungsspalt über die mindestens eine Magnetluftkühlungsspalt-Einlassöffnung zugeführt wird. Vorzugsweise weist das Kühlungsmedium an der mindestens einen Magnetluftkühlungsspalt-Auslassöffnung eine Kühlungsmedium-Temperatur auf, die größer ist als die Kühlungsmedium-Temperatur des Kühlungsmediums, wenn es dem Magnetluftkühlungsspalt an der mindestens einen Magnetluftkühlungsspalt-Einlassöffnung zugeführt wird.

In der Radialrichtung weist der Magnetluftkühlungsspalt eine Höhe von mindestens 5 mm, 10 mm, 15 mm oder 20 mm und/oder maximal von 50 mm, 40 mm, 30 mm, 20 mm, 10 mm oder 5 mm auf. Insbesondere beträgt die Höhe des Magnetluftkühlungsspalts im Wesentlichen 12 mm. In der Axialrichtung weist der Magnetluftkühlungsspalt eine Breite von mindestens 100 mm, 200 mm, 300 mm, 400 mm, 500 mm, 600 mm, 700 mm, 800 mm, 900 mm, 1000 mm, 1200 mm, 1400 mm oder mehr und/oder maximal 2000 mm, 1800 mm, 1600 mm, 1400 mm, 1200 mm, 1000 mm, 900 mm, 800 mm, 700 mm, 600 mm, 500 mm, 400 mm oder weniger auf. In der Umfangsrichtung weist der Magnetluftkühlungsspalt eine Umfangserstreckung von mindestens 10°, 20°, 30°, 40°, 45°, 50°, 60°, 70°, 80°, 90°, 100°, 110°, 120°, 130°, 135°, 140°, 150°, 160°, 170°, 180° oder mehr und/oder maximal 180°, 170°, 160°, 150°, 140°, 135°, 130°, 120°, 110°, 100°, 90°, 80°, 70°, 60°, 50°, 45°, 40°, 30°, 20°, 10° oder weniger auf.

Die Anordnung mindestens eines Magnetluftkühlungsspalts zwischen der Magneteinheit und der Rotor-Außenumfangsfläche ermöglicht eine gleichmäßigere und optimiertere Kühlung des Generators. Insbesondere kann hierdurch sichergestellt werden, dass der Generator auch bei hohen Umgebungstemperaturen unterhalb der thermischen Grenze der Magnete der Magneteinheit bleibt. Ferner ermöglicht die erfindungsgemäße Lösung eine spezifische Ausgestaltung der Magnetluftkühlungsspalt-Auslassöffnung und/oder der Magnetluftkühlungsspalt-Einlassöffnung, was eine an die klimatischen Umgebungsbedingungen der Windenergieanlage angepasste Kühlung des Generators ermöglicht. Insbesondere ist es denkbar, die Magnetluftkühlungsspalt-Auslassöffnung und/oder der Magnetluftkühlungsspalt-Einlassöffnung mit entsprechenden Einsätzen zu versehen, so dass die Kühlung des Generators an die Umgebungsbedingungen der Windenergieanlage schnell und einfach angepasst werden können.

Zu den Vorteilen, Ausführungsvarianten und Ausführungsdetails dieses Aspekts der Erfindung und ihrer jeweiligen Fortbildungen wird auf die nachstehende Beschreibung zu den entsprechenden Merkmalen der weiteren Aspekte bzw. zu den entsprechenden Merkmalen der Fortbildungen der weiteren Aspekte verwiesen.

Gemäß einer bevorzugten Ausführungsform des Generatorsegments ist es vorgesehen, dass die mindestens eine Magnetluftkühlungsspalt-Auslassöffnung an der ersten und/oder zweiten Rotor-Stirnseite des Rotorsegments ausgebildet wird, und/oder sich zwischen der Rotor-Außenumfangsfläche und der Rotor-Innenumfangsfläche erstreckt. Ergänzend oder alternativ ist es gemäß der bevorzugten Ausführungsform des Generatorsegments vorgesehen, dass die mindestens eine Magnetluftkühlungsspalt-Einlassöffnung an der ersten und/oder zweiten Rotor-Stirnseite des Rotorsegments ausgebildet wird, und/oder sich zwischen der Rotor-Außenumfangsfläche und der Rotor-Innenumfangsfläche erstreckt.

Vorzugsweise ist die mindestens eine Magnetluftkühlungsspalt-Auslassöffnung an der ersten Rotor-Stirnseite des Rotorsegments ausgebildet und/oder angeordnet und die mindestens eine Magnetluftkühlungsspalt-Einlassöffnung ist an der zweiten Rotor-Stirnseite des Rotorsegments ausgebildet und/oder angeordnet. Alternativ ist vorzugsweise die mindestens eine Magnetluftkühlungsspalt-Auslassöffnung an der zweiten Rotor-Stirnseite des Rotorsegments ausgebildet und/oder angeordnet und die mindestens eine Magnetluftkühlungsspalt-Einlassöffnung ist an der ersten Rotor-Stirnseite des Rotorsegments ausgebildet und/oder angeordnet.

Vorzugsweise ist die mindestens eine Magnetluftkühlungsspalt-Auslassöffnung an der ersten oder zweiten Rotor-Stirnseite des Rotorsegments ausgebildet und/oder angeordnet und die mindestens eine Magnetluftkühlungsspalt-Einlassöffnung erstreckt sich zwischen der Rotor-Außenumfangsfläche und der Rotor-Innenumfangsfläche. Alternativ ist die mindestens eine Magnetluftkühlungsspalt-Auslassöffnung an der ersten und zweiten Rotor-Stirnseite des Rotorsegments ausgebildet und/oder angeordnet und die mindestens eine Magnetluftkühlungsspalt-Einlassöffnung erstreckt sich zwischen der Rotor-Außenumfangsfläche und der Rotor-Innenumfangsfläche.

Ferner kann es bevorzugt sein, dass die mindestens eine Magnetluftkühlungsspalt-Auslassöffnung und die mindestens eine Magnetluftkühlungsspalt-Einlassöffnung sich jeweils zwischen der Rotor-Außenumfangsfläche und der Rotor-Innenumfangsfläche erstrecken.

Insbesondere ist es bevorzugt, dass die mindestens eine Magnetluftkühlungsspalt-Auslassöffnung angrenzend zu oder im Bereich der ersten und/oder zweiten Rotorstirnseite angeordnet ist. Insbesondere ist es bevorzugt, dass die mindestens eine Magnetluftkühlungsspalt-Einlassöffnung angrenzend zu oder im Bereich der ersten und/oder zweiten Rotorstirnseite angeordnet ist.

Ferner ist nach einer bevorzugten Fortbildung des Generatorsegments vorgesehen, dass die mindestens eine Magnetluftkühlungsspalt-Einlassöffnung, die sich zwischen der Rotor-Außenumfangsfläche und der Rotor-Innenumfangsfläche erstreckt, beabstandet zu der ersten und zweiten Rotor-Stirnseite angeordnet ist. Vorzugsweise ist die mindestens eine Magnetluftkühlungsspalt-Einlassöffnung mittig zwischen der ersten und zweiten Rotor-Stirnseite angeordnet. Ferner kann es bevorzugt sein, dass die mindestens eine Magnetluftkühlungsspalt-Einlassöffnung zwischen der ersten und zweiten Rotor-Stirnseite angeordnet ist, wobei der Abstand zur ersten Rotor-Stirnseite größer ist als zur zweiten Rotor-Stirnseite. Ferner kann es bevorzugt sein, dass die mindestens eine Magnetluftkühlungsspalt-Einlassöffnung zwischen der ersten und zweiten Rotor-Stirnseite angeordnet ist, wobei der Abstand zur ersten Rotor-Stirnseite kleiner ist als zur zweiten Rotor-Stirnseite.

Ferner ist nach einer bevorzugten Fortbildung des Generatorsegments vorgesehen, dass die mindestens eine Magnetluftkühlungsspalt-Auslassöffnung, die sich zwischen der Rotor-Außenumfangsfläche und der Rotor-Innenumfangsfläche erstreckt, beabstandet zu der ersten und zweiten Rotor-Stirnseite angeordnet ist. Vorzugsweise ist die mindestens eine Magnetluftkühlungsspalt-Auslassöffnung mittig zwischen der ersten und zweiten Rotor-Stirnseite angeordnet. Ferner kann es bevorzugt sein, dass die mindestens eine Magnetluftkühlungsspalt-Auslassöffnung zwischen der ersten und zweiten Rotor-Stirnseite angeordnet ist, wobei der Abstand zur ersten Rotor-Stirnseite größer ist als zur zweiten Rotor-Stirnseite. Ferner kann es bevorzugt sein, dass die mindestens eine Magnetluftkühlungsspalt-Auslassöffnung zwischen der ersten und zweiten Rotor-Stirnseite angeordnet ist, wobei der Abstand zur ersten Rotor-Stirnseite kleiner ist als zur zweiten Rotor-Stirnseite.

Vorzugsweise entspricht die Anzahl der mindestens einen Magnetluftkühlungsspalt-Einlassöffnung der Anzahl der mindestens einen Magnetluftkühlungsspalt-Auslassöffnung. Vorzugsweist ist die Anzahl der mindestens einen Magnetluftkühlungsspalt-Einlassöffnung größer als die Anzahl der mindestens einen Magnetluftkühlungsspalt-Auslassöffnung.

Vorzugsweise entspricht der Abstand zwischen der Magnetluftkühlungsspalt-Einlassöffnung und der ersten Rotor-Stirnseite dem Abstand zwischen der Magnetluftkühlungsspalt-Einlassöffnung und der zweiten Rotor-Stirnseite. Vorzugsweise ist ergänzend oder alternativ vorgesehen, dass der Abstand zwischen der mindestens einen Magnetluftkühlungsspalt-Einlassöffnung und der ersten Rotor-Stirnseite kleiner ist als der Abstand zwischen der mindestens einen Magnetluftkühlungsspalt-Einlassöffnung und der zweiten Rotor-Stirnseite.

Ferner ist nach einer bevorzugten Fortbildung des Generatorsegments vorgesehen, dass die mindestens eine Magnetluftkühlungsspalt-Einlassöffnung, die sich zwischen der Rotor-Außenumfangsfläche und der Rotor-Innenumfangsfläche erstreckt, angrenzend zu der ersten und/oder zweiten Rotor-Stirnseite angeordnet ist.

Ferner ist nach einer bevorzugten Fortbildung des Generatorsegments vorgesehen, dass die mindestens eine Magnetluftkühlungsspalt-Auslassöffnung, die sich zwischen der Rotor-Außenumfangsfläche und der Rotor-Innenumfangsfläche erstreckt, beabstandet zu der ersten und zweiten Rotor-Stirnseite angeordnet ist.

Vorzugsweise entspricht der der Abstand zwischen der Magnetluftkühlungsspalt-Auslassöffnung und der ersten Rotor-Stirnseite dem Abstand zwischen der Magnetluftkühlungsspalt-Auslassöffnung und der zweiten Rotor-Stirnseite.

Vorzugsweise ist ergänzend oder alternativ vorgesehen, dass der Abstand zwischen der mindestens einen Magnetluftkühlungsspalt-Auslassöffnung und der ersten Rotor-Stirnseite kleiner ist als der Abstand zwischen der mindestens einen Magnetluftkühlungsspalt-Auslassöffnung und der zweiten Rotor-Stirnseite.

Ferner ist nach einer bevorzugten Fortbildung des Generatorsegments vorgesehen, dass die mindestens eine Magnetluftkühlungsspalt-Auslassöffnung, die sich zwischen der Rotor-Außenumfangsfläche und der Rotor-Innenumfangsfläche erstreckt, angrenzend zu der ersten oder zweiten Rotor-Stirnseite angeordnet ist.

Gemäß einer weiteren bevorzugten Ausführungsform des Generatorsegments ist vorgesehen, dass die mindestens eine Magnetluftkühlungsspalt-Einlassöffnung als Durchgangsöffnung und/oder Durchgangsbohrung ausgebildet ist, und/oder als ringförmiger oder teilringförmiger Spalt ausgebildet ist.

Gemäß einer weiteren bevorzugten Ausführungsform des Generatorsegments ist ergänzend oder alternativ vorgesehen, dass die mindestens eine Magnetluftkühlungsspalt-Auslassöffnung als Durchgangsöffnung und/oder Durchgangsbohrung ausgebildet ist, und/oder als ringförmiger oder teilringförmiger Spalt ausgebildet ist.

Es kann bevorzugt sein, dass ein Öffnungsquerschnitt der mindestens einen Magnetluftkühlungsspalt-Einlassöffnung kleiner ist als ein Öffnungsquerschnitt der mindestens einen Magnetluftkühlungsspalt-Auslassöffnung. Ferner kann es bevorzugt sein, dass der Öffnungsquerschnitt der mindestens einen Magnetluftkühlungsspalt-Einlassöffnung größer ist als der Öffnungsquerschnitt der mindestens einen Magnetluftkühlungsspalt-Auslassöffnung. Ferner kann es bevorzugt sein, dass der Öffnungsquerschnitt der mindestens einen Magnetluftkühlungsspalt-Einlassöffnung dem Öffnungsquerschnitt der mindestens einen Magnetluftkühlungsspalt-Auslassöffnung entspricht.

Ferner umfasst das Generatorsegment nach einer bevorzugten Fortbildung mehrere in Umfangsrichtung und/oder in Axialrichtung beabstandet zueinander angeordnete Magnetluftkühlungsspalt-Einlassöffnungen. Ergänzend oder alternativ umfasst das Generatorsegment nach einer bevorzugten Fortbildung mehrere in Umfangsrichtung und/oder in Axialrichtung beabstandet zueinander angeordnete Magnetluftkühlungsspalt-Auslassöffnungen.

Nach einer weiteren bevorzugten Fortbildung des Generatorsegments ist vorgesehen, dass die Magnetluftkühlungsspalt-Einlassöffnungen in Umfangsrichtung und/oder Axialrichtung äquidistant zueinander angeordnet sind. Ergänzend oder alternativ ist nach einer bevorzugten Fortbildung des Generatorsegments vorgesehen, dass die Magnetluftkühlungsspalt-Auslassöffnungen in Umfangsrichtung und/oder Axialrichtung äquidistant zueinander angeordnet sind.

Diese Fortbildungen ermöglichen eine nochmal gleichmäßigere Kühlung des Generators.

Nach einer weiteren bevorzugten Ausführungsform des Generatorsegments ist vorgesehen, dass der Abstand zwischen der jeweiligen Magnetluftkühlungsspalt-Einlassöffnung und der ersten Rotor-Stirnseite gleich ist oder bei mindestens zwei Magnetluftkühlungsspalt-Einlassöffnungen verschieden ist.

Ergänzend oder alternativ ist gemäß einer ferner bevorzugten Fortbildung des Generatorsegments vorgesehen, dass der Abstand zwischen der jeweiligen Magnetluftkühlungsspalt-Auslassöffnung und der ersten Rotor-Stirnseite gleich ist oder bei mindestens zwei Magnetluftkühlungsspalt-Auslassöffnungen verschieden ist.

Weiterhin ist gemäß einer bevorzugten Ausführungsform des Generatorsegments vorgesehen, dass der Durchmesser der Magnetluftkühlungsspalt-Einlassöffnungen identisch ist oder der Durchmesser bei mindestens zwei Magnetluftkühlungsspalt-Einlassöffnungen verschieden ist.

Ergänzend oder alternativ ist nach einer bevorzugten Fortbildung des Generatorsegments vorgesehen, dass der Durchmesser der Magnetluftkühlungsspalt-Auslassöffnungen identisch ist oder der Durchmesser bei mindestens zwei Magnetluftkühlungsspalt-Auslassöffnungen verschieden ist.

Diese Fortbildungen ermöglichen, dass die Kühlung des Generators bedarfsgerecht in Abhängigkeit der Umgebungsbedingungen der Windenergieanlage am Betriebsstandort angepasst werden kann.

Ferner umfasst das Generatorsegment in einer weiteren bevorzugten Fortbildung mindestens einen Drosselstopfen, wobei der mindestens eine Drosselstopfen in der mindestens einen Magnetluftkühlungsspalt-Einlassöffnung angeordnet ist. Vorzugsweise kann je Magnetluftkühlungsspalt-Einlassöffnung ein Drosselstopfen vorgesehen werden. Es kann bevorzugt sein, dass für die Kühlung des Generators ein Teil der Magnetluftkühlungsspalt-Einlassöffnungen einen Drosselstopfen aufweisen und ein Teil der Magnetluftkühlungsspalt-Einlassöffnungen keinen Drosselstopfen aufweisen.

Insbesondere ist es bevorzugt, dass der jeweilige Drosselstopfen kraft- und/oder formschlüssig in der jeweiligen Magnetluftkühlungsspalt-Einlassöffnung angeordnet ist. Vorzugsweise weist der Drosselstopfen hierzu ein Gewinde und/oder Lamellen auf, welche eine kraft- und/oder formschlüssige Befestigung des Drosselstopfens in einer Magnetluftkühlungsspalt-Einlassöffnung ermöglichen. Es kann auch eine stoffschlüssige Befestigung eines Drosselstopfens in einer Magnetluftkühlungsspalt-Einlassöffnung bevorzugt sein. Insbesondere kann es bevorzugt sein, einen Drosselstopfen in eine Magnetluftkühlungsspalt-Einlassöffnung einzukleben.

Die Anordnung eines Drosselstopfens in einer Magnetluftkühlungsspalt-Einlassöffnung ermöglicht, den Öffnungsquerschnitt an der jeweiligen Magnetluftkühlungsspalt-Einlassöffnung schnell und einfach bedarfsgerecht einzustellen. Beispielsweise kann hierdurch die Kühlung des Generators im Betriebszustand der Windenergieanlage je nach Jahreszeit modifiziert werden.

Weiterhin ist gemäß einer bevorzugten Fortbildung des Generatorsegments vorgesehen, dass der mindestens eine Drosselstopfen einen Drosselhohlkörper umfasst, der als Hohlzylinder einen Drosselkanal ausbildet, der sich in einer Längsrichtung zwischen einer ersten und zweiten Drossel-Stirnseite erstreckt und der Hohlzylinder eine Hohlzylinderwand aufweist, die sich orthogonal zur Längsrichtung in Radialrichtung zwischen einer Drossel-Innenwandfläche und einer Drossel-Außenwandfläche mit einer Wandstärke erstreckt. Vorzugsweise weist der Drosselkanal eines Drosselstopfens einen Öffnungsquerschnitt auf, der kleiner ist als ein Öffnungsquerschnitt der Magnetluftkühlungsspalt-Einlassöffnung, in welcher der Drosselstopfen angeordnet ist.

Ferner ist nach einer weiteren bevorzugten Fortbildung des Generatorsegments vorgesehen, dass der mindestens eine Drosselstopfen an der ersten Drossel-Stirnseite einen Stützring aufweist, der einen Außendurchmesser aufweist, der größer ist als ein Außendurchmesser der Drossel-Außenwandfläche. Insbesondere ist der Stützring vorgesehen, um zu verhindern, dass der Drosselstopfen durch die jeweilige Magnetluftkühlungsspalt-Einlassöffnung rutscht. Beispielsweise kann der Stützring je nach Anordnung des Drosselstopfens bzw. der Magnetluftkühlungsspalt-Einlassöffnung an der Rotor-Innenumfangsfläche oder der ersten oder zweiten Rotor-Stirnseite anliegen. Dies verhindert in bevorzugter Weise, dass der Drosselstopfen durch die jeweilige Magnetluftkühlungsspalt-Einlassöffnung in den Magnetluftkühlungsspalt rutscht.

Nach einer ferner bevorzugten Fortbildung des Generatorsegments ist vorgesehen, dass der mindestens eine Drosselstopfen an der Drossel-Außenwandfläche mindestens einen ringförmigen und/oder spiralförmigen Vorsprung aufweist, wobei der mindestens eine Vorsprung vorzugsweise ein Gewinde und/oder Lamellen umfasst oder ist.

Gemäß einem weiteren Aspekt der Erfindung wird die eingangs genannte Aufgabe durch einen Generator nach Anspruch 13 gelöst. Der Generator ist ein Generator für eine Windenergieanlage. Der Generator umfasst mindestens ein zuvor beschriebenes Generatorsegment gemäß dem ersten Aspekt bzw. gemäß möglicher Ausführungsformen des ersten Aspekts.

Gemäß einem weiteren Aspekt der Erfindung wird die eingangs genannte Aufgabe durch eine Windenergieanlage nach Anspruch 14 gelöst. Die Windenergieanlage umfasst mindestens ein zuvor beschriebenes Generatorsegment gemäß dem ersten Aspekt bzw. gemäß möglicher Ausführungsformen des ersten Aspekts. Ergänzend oder alternativ umfasst die Windenergieanlage einen Generator gemäß dem weiteren Aspekt bzw. gemäß möglicher Ausführungsformen des weiteren Aspekts.

Gemäß einem weiteren Aspekt der Erfindung wird die eingangs genannte Aufgabe gemäß Anspruch 15 durch eine Verwendung mindestens eines Drosselstopfens in einem zuvor beschriebenen Generatorsegment gemäß dem ersten Aspekt bzw. gemäß möglicher Ausführungsformen des ersten Aspekts gelöst. Ergänzend oder alternativ wird die eingangs genannte Aufgabe gemäß Anspruch 15 durch eine Verwendung mindestens eines Drosselstopfens in einem zuvor beschriebenen Generator gemäß dem weiteren Aspekt bzw. gemäß möglicher Ausführungsformen des weiteren Aspekts gelöst. Gemäß dieser weiteren Aspekte ist es vorgesehen, dass mindestens ein Drosselstopfen in mindestens einer Magnetluftkühlungsspalt-Einlassöffnung angeordnet ist.

Gemäß einer bevorzugten Ausführungsform ist der für die Verwendung vorgesehene Drosselstopfen gemäß dem Drosselstopfen des Generatorsegments gemäß dem ersten Aspekt bzw. möglicher Ausführungsformen des ersten Aspekts ausgebildet.

Zu den Vorteilen, Ausführungsvarianten und Ausführungsdetails dieser weiteren Aspekte der Erfindung und ihrer jeweiligen Fortbildungen wird auf die vorangegangene Beschreibung zu den entsprechenden Merkmalen des ersten Aspekts bzw. zu den entsprechenden Merkmalen der Fortbildungen des ersten Aspekts verwiesen.

Bevorzugte Ausführungsformen der Erfindung werden beispielhaft anhand der beiliegenden Figuren erläutert. In den Figuren sind gleiche oder im Wesentlichen funktionsgleiche bzw. -ähnliche Elemente mit den gleichen Bezugszeichen bezeichnet. Es zeigen:
- Fig. 1:: eine schematische, dreidimensionale Ansicht einer beispielhaften Ausführungsform einer Windenergieanlage;
- Fig. 2:: eine schematische Schnittansicht eines Generatorsegments parallel zur Drehachse gemäß einem Ausführungsbeispiel;
- Fig. 3:: eine schematische Seitenansicht des in Fig. 2 gezeigten Ausführungsbeispiels;
- Fig. 4:: eine schematische Schnittansicht eines Drosselstopfens gemäß einem Ausführungsbeispiel;
- Fig. 5:: eine schematische Draufsicht des in Fig. 4 gezeigten Ausführungsbeispiels;
- Fig. 6:: eine schematische Schnittansicht eines Generatorsegments parallel zur Drehachse gemäß einem weiteren Ausführungsbeispiel; und
- Fig. 7:: eine schematische Schnittansicht eines Generatorsegments parallel zur Drehachse gemäß einem weiteren Ausführungsbeispiel.

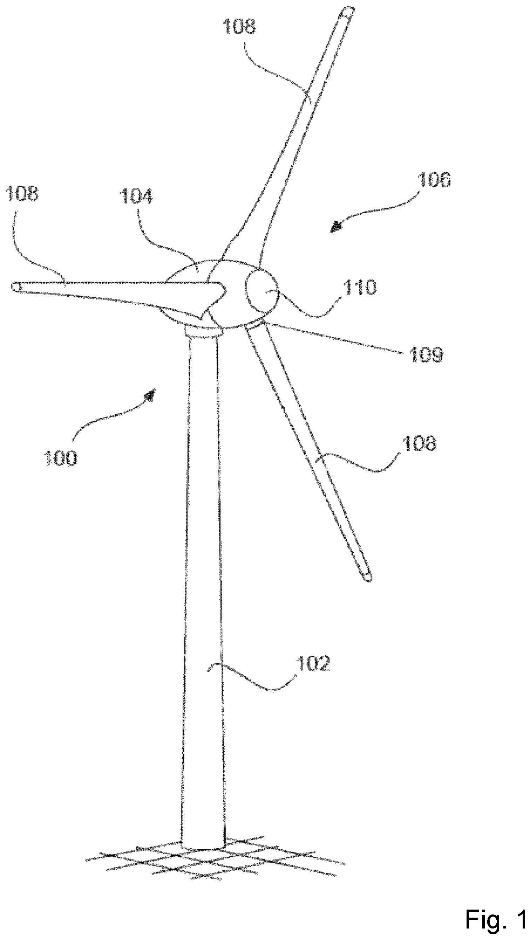

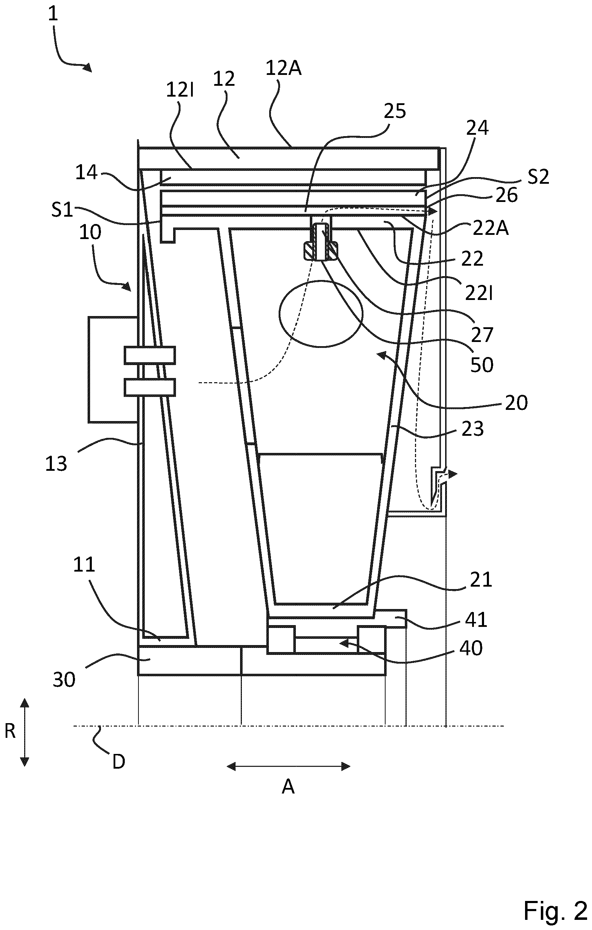

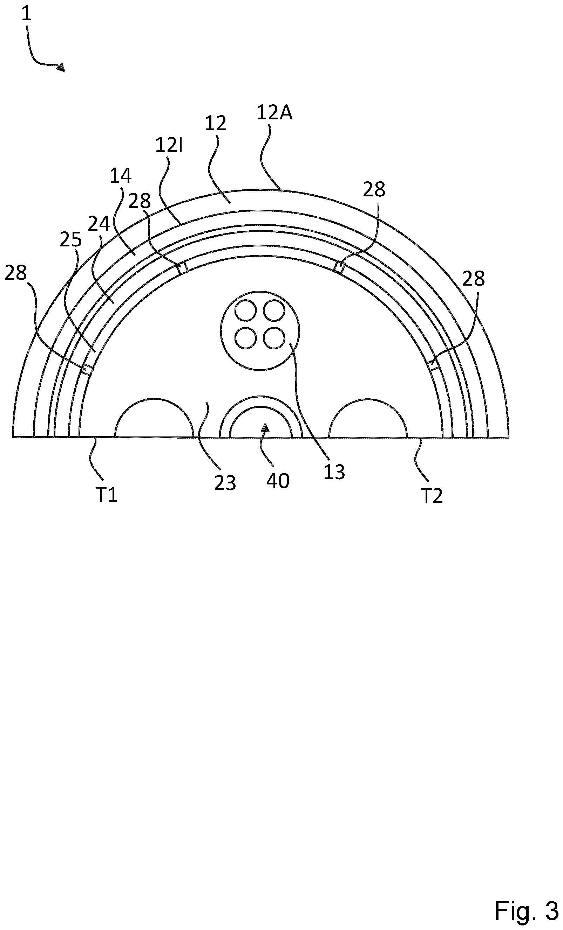

Figur 1 zeigt eine schematische, dreidimensionale Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein aerodynamischer Rotor 106 mit drei Rotorblättern 108 und einem Spinner 110 angeordnet. Der aerodynamische Rotor 106 wird im Betrieb durch den Wind in eine Drehbewegung versetzt und treibt dadurch einen Generator, insbesondere einen Rotor des Generators, an. Der Generator der in Figur 1 beispielhaft gezeigten Windenergieanlage kann aus mehreren Generatorsegmenten des in den Figuren 2 und 3 gezeigten Ausführungsbeispiel eines Generatorsegments zusammengesetzt sein.

Figur 2 zeigt eine schematische Schnittansicht eines Generatorsegments 1 parallel zur Drehachse D gemäß einem Ausführungsbeispiel. Figur 3 zeigt eine schematische Seitenansicht des in Figur 2 gezeigten Ausführungsbeispiels. Das in den Figuren 2 und 3 gezeigte Ausführungsbeispiel zeigt ein Generatorsegment 1 eines Innenläufers. Entsprechend ist das Rotorsegment 20 in Bezug auf das Statorsegment 10 in Radialrichtung R innenliegend bzw. innerhalb des Statorsegments 10 angeordnet.

Das Generatorsegment gemäß diesem Ausführungsbeispiel erstreckt sich zwischen einer ersten und zweiten Trennschnittstelle T1, T2 um 180°. Dies ist Figur 3 zu entnehmen. Entsprechend umfasst der Generator zwei Generatorsegmente 1, die über die jeweiligen ersten und zweiten Trennschnittstellen T1, T2 miteinander verbunden sind, so dass der Rotor, umfassend zwei Rotorsegmente 20, und der Stator, umfassend zwei Statorsegmente 10, koaxial zur Drehachse D des Generators angeordnet sind.

Das Statorsegment 10 weist hierzu einen radial innenliegenden Statorflansch 11, ein radial außenliegendes Spulenträgersegment 12 und einen Statorsegment-Tragabschnitt 13 auf.

Das Statorsegment 10 ist über den Statorflansch 11 an einem Stator-Grundkörperflansch 30 einer Lagereinheit 40 befestigt. Dies ist insbesondere aus Figur 2 ersichtlich. Durch die koaxiale Anordnung des Stator-Grundkörperflansches 30 zur Drehachse D wird eine koaxiale Anordnung des Statorsegments 10 zur Drehachse D mittels des Statorflansches 11 ermöglicht. Üblicherweise ist das Statorsegment 10 mit der Lagereinheit 40 durch eine Schraubenverbindung (nicht dargestellt) zwischen dem Statorflansch 11 und dem Stator-Grundkörperflansch 30 drehmomentfest verbunden. Üblicherweise weisen der Statorflansch 11 und der Stator-Grundkörperflansch 30 eine ringförmige und/oder teilringförmige Geometrie auf.

Das Statorsegment 10 weist radial außenliegend das Spulenträgersegment 12 auf, welches üblicherweise eine ringförmige und/oder teilringförmige Geometrie aufweist. Das Spulenträgersegment 12 erstreckt sich in der Radialrichtung R zwischen einer Stator-Außenumfangsfläche 12A und einer Stator-Innenumfangsfläche 12I, wobei die die Stator-Außenumfangsfläche 12A und die Stator-Innenumfangsfläche 12I jeweils eine Haupterstreckungsrichtung orthogonal zur Radialrichtung R in einer Umfangsrichtung und einer Axialrichtung A aufweisen. Es ist vorgesehen, dass an der Stator-Innenumfangsfläche 12I eine Statorspuleneinheit 14 mit mehreren Statorspulen angeordnet ist.

Der Statorsegment-Tragabschnitt 13 des Statorsegments 10 ist zwischen dem in Radialrichtung R innenliegenden Statorflansch 11 und dem in Radialrichtung R außenliegenden Spulenträgersegment 12 angeordnet. Vorzugsweise ist der Statorsegment-Tragabschnitt 13 an einem Ende oder in einem Endabschnitt des Spulenträgersegments angeordnet, wie dies in Figur 3 schematisch dargestellt ist. Der Statorsegment-Tragabschnitt 13 erstreckt sich in der Radialrichtung R zwischen dem in Radialrichtung R innenliegenden Statorflansch 11 und dem in Radialrichtung R außenliegenden Spulenträgersegment 12. Der Statorsegment-Tragabschnitt 13 ist dabei sowohl mit dem innenliegenden Statorflansch 11 als auch mit dem außenliegenden Spulenträgersegment 12 verbindbar oder verbunden.

Das Statorsegment ist in bevorzugter Weise ausgebildet, das Rotorsegment im Statorsegment aufzunehmen. Vorzugsweise ist das Statorsegment 10 hierzu topfförmig ausgebildet.

Das Rotorsegment 20 weist einen radial innenliegenden Rotorflansch 21, ein radial außenliegendes Magnetträgersegment 22 und einen Rotorsegment-Tragabschnitt 23 auf.

Das Rotorsegment 20 ist über den Rotorflansch 21 an einem Rotor-Grundkörperflansch 41 der Lagereinheit 40 befestigt. Dies ist insbesondere aus Figur 2 ersichtlich. Durch die koaxiale Anordnung des Rotor-Grundkörperflansches 41 zur Drehachse D wird eine koaxiale Anordnung des Rotorsegments 20 zur Drehachse D mittels des Rotorflansches 21 ermöglicht. Üblicherweise ist das Rotorsegment 20 mit der Lagereinheit 40 durch eine Schraubenverbindung (nicht dargestellt) zwischen dem Rotorflansch 21 und dem Rotor-Grundkörperflansch 41 drehmomentfest verbunden. Üblicherweise weisen der Rotorflansch 21 und der Rotor-Grundkörperflansch 41 eine ringförmige und/oder teilringförmige Geometrie auf.

Das Rotorsegment weist radial außenliegend das Magnetträgersegment 22 mit einer ringförmigen oder teilringförmigen Geometrie auf. Das Magnetträgersegment 22 erstreckt sich in der Radialrichtung R zwischen einer Rotor-Außenumfangsfläche 22A und einer Rotor-Innenumfangsfläche 22I. Es ist vorgesehen, dass die Rotor-Außenumfangsfläche 22A und die Rotor-Innenumfangsfläche 22I jeweils eine Haupterstreckungsrichtung orthogonal zur Radialrichtung R in einer Umfangsrichtung U und einer Axialrichtung A aufweisen. Ferner erstreckt sich das radial außenliegende Magnetträgersegment 22 in der Axialrichtung A zwischen einer ersten Rotor-Stirnseite S1 und einer zweiten Rotor-Stirnseite S2.

Der Rotorsegment-Tragabschnitt 23 des Rotorsegments ist zwischen dem in Radialrichtung R innenliegenden Rotorflansch 21 und dem in Radialrichtung R außenliegenden Magnetträgersegment 22 angeordnet. Der Rotorsegment-Tragabschnitt 23 erstreckt sich in der Radialrichtung R zwischen dem in Radialrichtung R innenliegenden Rotorflansch 21 und dem in Radialrichtung R außenliegenden Magnetträgersegment 22. Der Rotorsegment-Tragabschnitt 23 ist dabei sowohl mit dem innenliegenden Rotorflansch 21 als auch mit dem außenliegenden Magnetträgersegment 22 verbindbar oder verbunden.

An der Rotor-Außenumfangsfläche 22A ist eine Magneteinheit 24 mit mehreren Magneten angeordnet. Es ist hierbei vorgesehen, dass die Magneteinheit 24 beabstandet zu der Rotor-Außenumfangsfläche 22A angeordnet ist, so dass zwischen der Magneteinheit 24 und der Rotor-Außenumfangsfläche 22A ein teilringförmiger Magnetluftkühlungsspalt 25 ausgebildet wird. In Umfangsrichtung ist der teilringförmige Magnetluftkühlungsspalt 25 durch Befestigungsstege 28 begrenzt, über die die Magneteinheit mit der Rotor-Außenumfangsfläche 22A verbunden ist. Es ist denkbar, dass die Magneteinheit mit der Rotor-Außenumfangsfläche 22A lediglich an bzw. im Bereich der ersten und zweiten Stirnseite S1, S2 über entsprechende Befestigungsstege 28 oder dergleichen miteinander verbunden sind, so dass der Magnetluftkühlungsspalt 25 ringförmig ausgebildet sein kann.

Ferner erstreckt sich der Magnetluftkühlungsspalt 25 zwischen mindestens einer Magnetluftkühlungsspalt-Auslassöffnung 26 und mindestens einer Magnetluftkühlungsspalt-Einlassöffnung 27. Es ist insbesondere vorgesehen, dass dem Magnetluftkühlungsspalt 25 zu Kühlungszwecken das Kühlungsmedium, etwa Luft, vorzugsweise ausschließlich über die mindestens eine Magnetluftkühlungsspalt-Einlassöffnung 27 zugeführt wird. Ferner ist insbesondere vorgesehen, dass dem Magnetluftkühlungsspalt 25 zu Kühlungszwecken das erwärmte Kühlungsmedium, etwa Luft, vorzugsweise ausschließlich über die mindestens eine Magnetluftkühlungsspalt-Auslassöffnung 26 abgeführt wird. Im vorliegenden Ausführungsbeispiel ist der Magnetluftkühlungsspalt 25 mit Ausnahme der mindestens einen Magnetluftkühlungsspalt-Einlassöffnung 27 und der mindestens einen Magnetluftkühlungsspalt-Auslassöffnung 26 gegenüber der Umgebung abgedichtet.

Im vorliegenden Ausführungsbeispiel wird dem Magnetluftkühlungsspalt 25 Luft als Kühlungsmedium zu Kühlungszwecken in radialer Richtung zugeführt. Hierzu sind am Magnetträgersegment 22 mehrere Magnetluftkühlungsspalt-Einlassöffnungen 27 angeordnet (sichtbar ist nur eine Magnetluftkühlungsspalt-Einlassöffnung 27), welche sich von der Rotor-Innenumfangsfläche 22I bis zur Rotor-Außenumfangsfläche 22A erstreckt. Insofern ist die Magnetluftkühlungsspalt-Einlassöffnung 27 als Durchgangsöffnung ausgebildet. Die Magnetluftkühlungsspalt-Einlassöffnungen 27 sind etwa mittig zwischen der ersten und zweite Stirnseite S1, S2 und in Umfangsrichtung äquidistant angeordnet, wobei der Abstand der jeweiligen Magnetluftkühlungsspalt-Einlassöffnungen 27 zu der ersten Stirnseite S1 gleich ist und auch der Durchmesser der jeweiligen Magnetluftkühlungsspalt-Einlassöffnungen 27 identisch ist.

Die Anordnung des Magnetluftkühlungsspalts zwischen der Magneteinheit und der Rotor-Außenumfangsfläche ermöglicht eine gleichmäßigere und optimiertere Kühlung des Generators. Insbesondere kann hierdurch sichergestellt werden, dass der Generator auch bei hohen Umgebungstemperaturen unterhalb der thermischen Grenze der Magnete der Magneteinheit bleibt. Ferner ermöglicht die erfindungsgemäße Lösung eine spezifische Ausgestaltung der Magnetluftkühlungsspalt-Auslassöffnung und/oder der Magnetluftkühlungsspalt-Einlassöffnung, was eine an die klimatischen Umgebungsbedingungen der Windenergieanlage angepasste Kühlung des Generators ermöglicht.

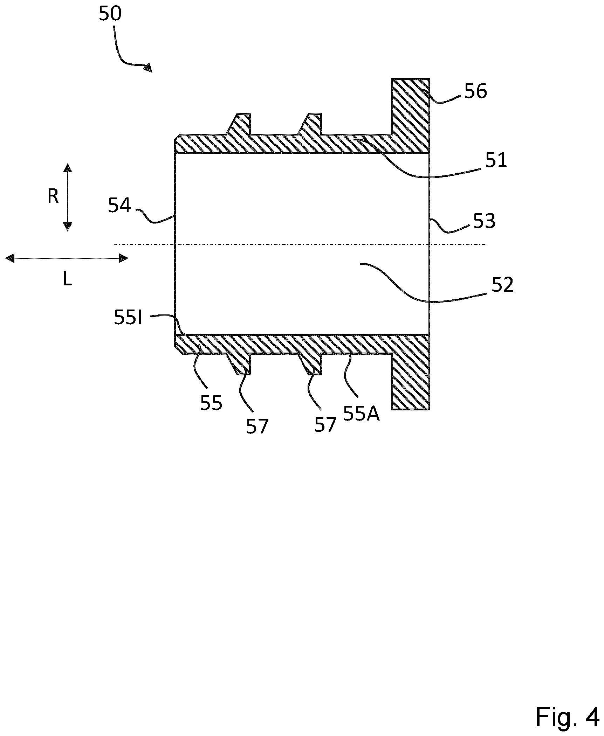

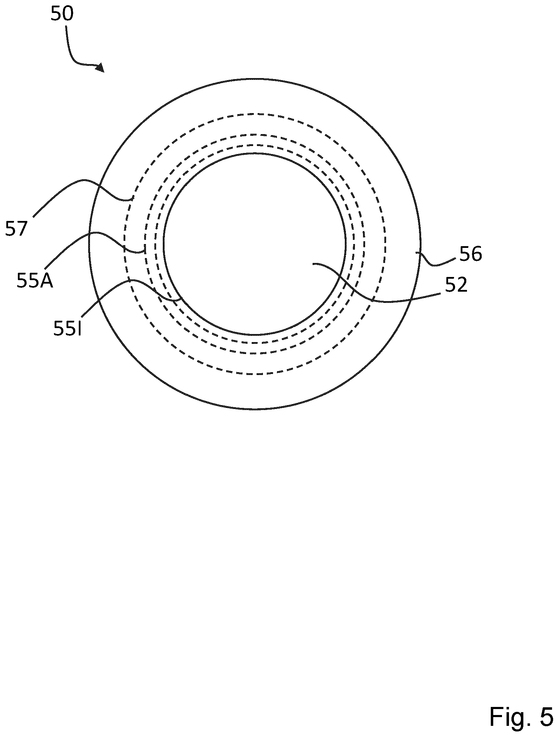

In dem vorliegenden Ausführungsbeispiel sind in den jeweiligen Magnetluftkühlungsspalt-Einlassöffnungen 27 jeweils ein Drosselstopfen 50 angeordnet, so dass die Kühlung des Generators an die Umgebungsbedingungen der Windenergieanlage schnell und einfach angepasst werden können. Figur 4 zeigt eine schematische Schnittansicht eines Drosselstopfens 50 gemäß einem Ausführungsbeispiel und Figur 5 zeigt eine schematische Draufsicht des in Figur 4 gezeigten Drosselstopfens 50.

Der Drosselstopfen 50 umfasst einen Drosselhohlkörper 51, der als Hohlzylinder einen Drosselkanal 52 ausbildet, der sich in einer Längsrichtung L zwischen einer ersten und zweiten Drossel-Stirnseite 53, 54 erstreckt und der Hohlzylinder eine Hohlzylinderwand 55 aufweist, die sich orthogonal zur Längsrichtung in Radialrichtung R zwischen einer Drossel-Innenwandfläche 55I und einer Drossel-Außenwandfläche 55A mit einer Wandstärke erstreckt. Der Drosselstopfen 50 ist derart angeordnet, dass sich der Drosselhohlkörper 51 mit dem Drosselkanal 52 innerhalb der Magnetluftkühlungsspalt-Einlassöffnungen 27 erstreckt. Ferner ist vorgesehen, dass der Drosselstopfen 50 an der ersten Drossel-Stirnseite 53 einen Stützring 56 aufweist, der einen Außendurchmesser aufweist, der größer ist als ein Außendurchmesser der Drossel-Außenwandfläche 55A. Durch den Stützring 56 liegt der Drosselstopfen 50 definiert an der Magnetluftkühlungsspalt-Einlassöffnung 27 an. Zur Fixierung des Drosselstopfens 50 in der jeweiligen Magnetluftkühlungsspalt-Einlassöffnung 27 weist der Drosselstopfen 50 an der Drossel-Außenwandfläche 55A zwei ringförmige lamellenartige Vorsprünge 57 auf. Hierdurch entsteht eine kraftschlüssige Verbindung zwischen dem Drosselstopfen 50 und der Magnetluftkühlungsspalt-Einlassöffnung 27, was ein herausrutschen des Drosselstopfens 50 aus der Magnetluftkühlungsspalt-Einlassöffnung 27 verhindert.

In dem vorliegenden Ausführungsbeispiel sind weder an der ersten noch an der zweiten Stirnseite noch an der Magneteinheit 24 Magnetluftkühlungsspalt-Einlassöffnungen 27 vorgesehen.

Im vorliegenden Ausführungsbeispiel wird dem Magnetluftkühlungsspalt 25 Luft als Kühlungsmedium zu Kühlungszwecken in axialer Richtung abgeführt. Hierzu sind an der zweiten Stirnseite S2 mehrere teilringförmige Magnetluftkühlungsspalt-Auslassöffnungen 26 angeordnet (sichtbar ist nur eine Magnetluftkühlungsspalt-Auslassöffnung 26). Die Magnetluftkühlungsspalt-Auslassöffnung 26 erstrecken sich in Umfangsrichtung wie auch der Magnetluftkühlungsspalt 25 zwischen den Befestigungsstegen 28, über welche die Magneteinheit 24 beabstandet an dem Magnetträgersegment 22 befestigt ist, so dass der Magnetluftkühlungsspalt 25 entsteht. In dem vorliegenden Ausführungsbeispiel sind weder an der ersten Stirnseite noch am Magnetträgersegment 22 noch an der Magneteinheit 24 Magnetluftkühlungsspalt-Auslassöffnungen 26 vorgesehen.

In dem vorliegenden Ausführungsbeispiel wird dem Generator bzw. dem Generatorsegment 1 Luft aus der Umgebung über entsprechende Öffnungen im Statorsegment-Tragabschnitt 13 und im Rotorsegment-Tragabschnitt 23 zugeführt. Die Öffnungen befinden sich im vorliegenden Ausführungsbeispiel auf der Seite der ersten Stirnseite S1. Über eine entsprechende Öffnung in einer seitlichen Gehäuseabdeckung des Generators bzw. des Generatorsegments 1 wird die im Generator erwärmte Luft in die Umgebung abgeführt. Hierzu wird ein Spalt zwischen einem feststehenden Gehäuseabdeckungsabschnitt, welcher am Spulenträgersegment befestigt ist, und einem rotierenden Gehäuseabdeckungsabschnitt, welcher am Rotorsegment-Tragabschnitt 23 befestigt ist, genutzt. Die Öffnung in der seitlichen Gehäuseabdeckung bzw. der Spalt ist auf der Seite der zweiten Stirnseite S2 vorgesehen.

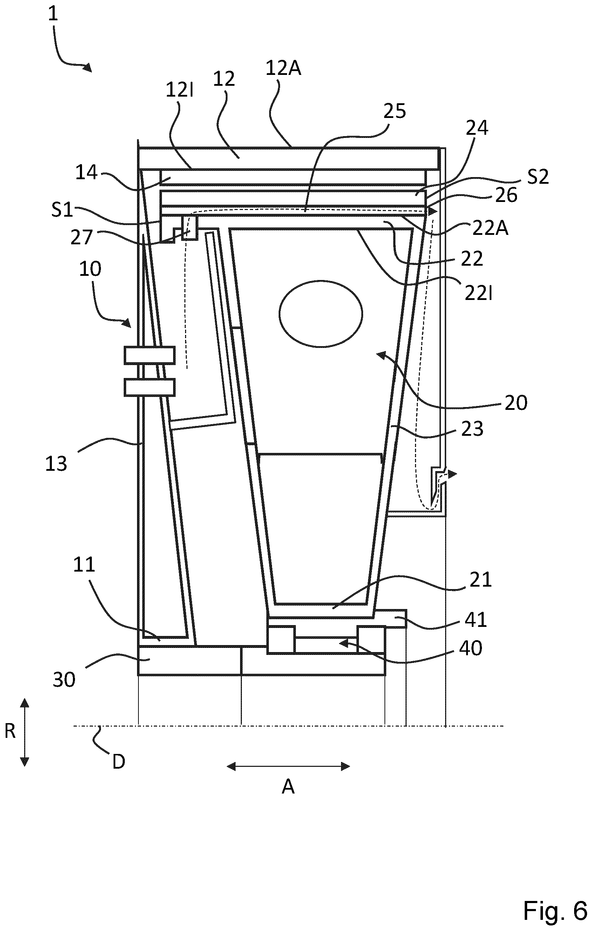

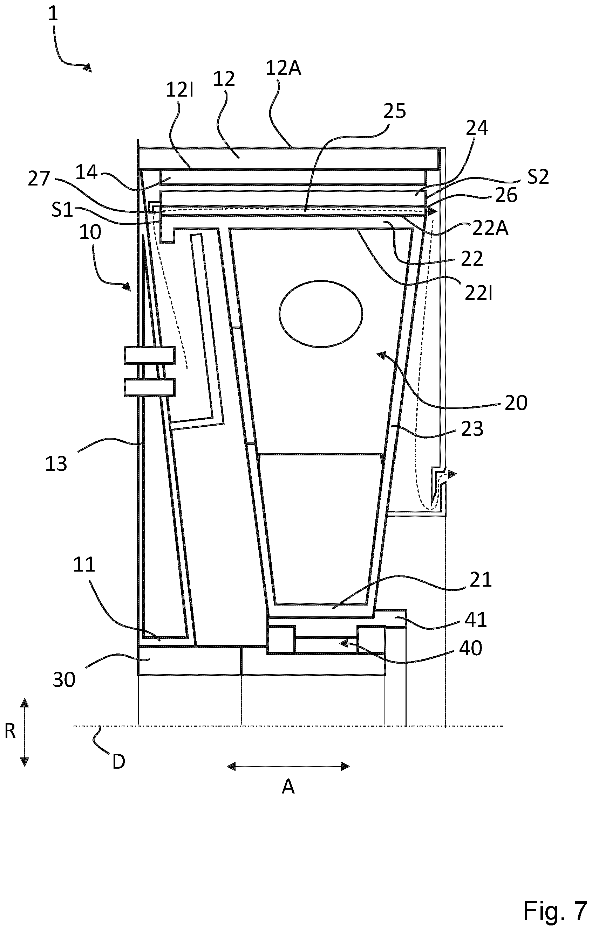

In den Figuren 6 und 7 sind exemplarisch weitere Ausführungsbeispiele von Generatorsegmenten 1 gezeigt. Dies unterscheiden sich von dem in den Figuren 2 und 3 gezeigten Ausführungsbeispiel lediglich dahingehend, dass die Magnetluftkühlungsspalt-Einlassöffnungen 27 an anderen Positionen vorgesehen sind und in den Magnetluftkühlungsspalt-Einlassöffnungen 27 keine Drosselstopfen angeordnet sind. In dem in Figur 6 gezeigten Ausführungsbeispiel sind die Magnetluftkühlungsspalt-Einlassöffnungen 27 angrenzend an der ersten Stirnseite S1 angeordnet, wobei sich die Magnetluftkühlungsspalt-Einlassöffnungen 27 in Radialrichtung durch das Magnetträgersegment hindurch erstrecken. In dem in Figur 7 gezeigten Ausführungsbeispiel sind die Magnetluftkühlungsspalt-Einlassöffnungen 27 an der ersten Stirnseite S1 des Magnetträgersegments 22 angeordnet. In diesem Ausführungsbeispiel sind die Magnetluftkühlungsspalt-Einlassöffnungen 27 somit teilringförmig ausgebildet und erstrecken sich in Umfangsrichtung zwischen den Befestigungsstegen 28.

Die in den Figuren 6 und 7 gezeigten Ausführungsbeispiele haben im Vergleich zu dem in den Figuren 2 und 3 gezeigten Ausführungsbeispiel den Vorteil, dass die Luft in Axialrichtung über die vollständige Breite oder zumindest fast über die vollständige Breite der Magneteinheit an dieser entlang strömt und somit die größer ist, über die der Generator gekühlt werden kann. Die in den Figuren 6 und 7 gezeigten Ausführungsbeispiele haben im Vergleich zu dem in den Figuren 2 und 3 gezeigten Ausführungsbeispiel den Nachteil, dass die Luft zur Kühlung des Generators stärker umgelenkt werden muss, was zu Reibungsverlusten führt und potentiell die Lärmemission erhöht.

## Patentansprüche

1. Generatorsegment (1) für einen Generator (103) einer Windenergieanlage (100), umfassend:
- ein Statorsegment (10), aufweisend einen radial innenliegenden Statorflansch (11) zur Befestigung des Statorsegments (10) an einem Stator-Grundkörperflansch (30) einer Lagereinheit (40), ein radial außenliegendes Spulenträgersegment (12) mit einer ringförmigen oder teilringförmigen Geometrie und einen Statorsegment-Tragabschnitt (13), der sich in einer Radialrichtung (R) zwischen dem radial innenliegenden Statorflansch (11) und dem radial außenliegenden Spulenträgersegment (12) erstreckt, wobei
∘ sich das radial außenliegende Spulenträgersegment (12) in der Radialrichtung (R) zwischen einer Stator-Außenumfangsfläche (12A) und einer Stator-Innenumfangsfläche (12I) erstreckt, wobei die Stator-Außenumfangsfläche (12A) und die Stator-Innenumfangsfläche (12I) jeweils eine Haupterstreckungsrichtung orthogonal zur Radialrichtung (R) aufweisen, und
∘ an der Stator-Innenumfangsfläche (12I) eine Statorspuleneinheit (14) mit mehreren Statorspulen angeordnet ist, und
- ein Rotorsegment (20), das in Radialrichtung (R) innerhalb des Statorsegments (10) angeordnet ist, das Rotorsegment (20) aufweisend einen radial innenliegenden Rotorflansch (21) zur Befestigung des Rotorsegments (20) an einem Rotor-Grundkörperflansch (41) der Lagereinheit (40), ein radial außenliegendes Magnetträgersegment (22) mit einer ringförmigen oder teilringförmigen Geometrie und einen Rotorsegment-Tragabschnitt (23), der sich in der Radialrichtung (R) zwischen dem radial innenliegenden Rotorflansch (21) und dem radial außenliegenden Magnetträgersegment (22) erstreckt, wobei
o sich das radial außenliegende Magnetträgersegment (22)
▪ in der Radialrichtung (R) zwischen einer Rotor-Außenumfangsfläche (22A) und einer Rotor-Innenumfangsfläche (22I) erstreckt, wobei die Rotor-Außenumfangsfläche (22A) und die Rotor-Innenumfangsfläche (22I) jeweils eine Haupterstreckungsrichtung orthogonal zur Radialrichtung (R) aufweisen, und
▪ in der Axialrichtung (A) zwischen einer ersten Rotor-Stirnseite (S1) und einer zweiten Rotor-Stirnseite (S2) erstreckt, und
o an der Rotor-Außenumfangsfläche (22A) eine Magneteinheit (24) mit mehreren Magneten angeordnet ist,
**dadurch gekennzeichnet, dass**
- die Magneteinheit (24) beabstandet zu der Rotor-Außenumfangsfläche (22A) angeordnet ist, so dass zwischen der Magneteinheit (24) und der Rotor-Außenumfangsfläche (22A) mindestens ein Magnetluftkühlungsspalt (25) ausgebildet wird, der sich zwischen mindestens einer Magnetluftkühlungsspalt-Auslassöffnung (26) und mindestens einer Magnetluftkühlungsspalt-Einlassöffnung (27) erstreckt.

2. Generatorsegment (1) nach dem vorhergehenden Anspruch 1, wobei
- die mindestens eine Magnetluftkühlungsspalt-Auslassöffnung (26)
∘ an der ersten und/oder zweiten Rotor-Stirnseite (S1, S2) des Rotorsegments (20) ausgebildet wird, und/oder
∘ sich zwischen der Rotor-Außenumfangsfläche (22A) und der Rotor-Innenumfangsfläche (22I) erstreckt; und/oder
- die mindestens eine Magnetluftkühlungsspalt-Einlassöffnung (27)
∘ an der ersten und/oder zweiten Rotor-Stirnseite (S1, S2) des Rotorsegments (20) ausgebildet wird, und/oder
∘ sich zwischen der Rotor-Außenumfangsfläche (22A) und der Rotor-Innenumfangsfläche (22I) erstreckt.

3. Generatorsegment (1) nach einem der vorhergehenden Ansprüche 1 oder 2, wobei
- die mindestens eine Magnetluftkühlungsspalt-Einlassöffnung (27), die sich zwischen der Rotor-Außenumfangsfläche (22A) und der Rotor-Innenumfangsfläche (22I) erstreckt,
∘ beabstandet zu der ersten und zweiten Rotor-Stirnseite (S1, S2) angeordnet ist, wobei vorzugsweise
▪ der Abstand zwischen der Magnetluftkühlungsspalt-Einlassöffnung (27) und der ersten Rotor-Stirnseite (S1) dem Abstand zwischen der Magnetluftkühlungsspalt-Einlassöffnung (27) und der zweiten Rotor-Stirnseite (S2) entspricht, und/oder
▪ der Abstand zwischen der mindestens einen Magnetluftkühlungsspalt-Einlassöffnung (27) und der ersten Rotor-Stirnseite (S1) kleiner ist als der Abstand zwischen der mindestens einen Magnetluftkühlungsspalt-Einlassöffnung (27) und der zweiten Rotor-Stirnseite (S2), und/oder
∘ angrenzend zu der ersten oder zweiten Rotor-Stirnseite (S1, S2) angeordnet ist; und/oder
- die mindestens eine Magnetluftkühlungsspalt-Auslassöffnung (26), die sich zwischen der Rotor-Außenumfangsfläche (22A) und der Rotor-Innenumfangsfläche (22I) erstreckt,
o beabstandet zu der ersten und zweiten Rotor-Stirnseite (S1, S2) angeordnet ist, wobei vorzugsweise
▪ der Abstand zwischen der Magnetluftkühlungsspalt-Auslassöffnung (26) und der ersten Rotor-Stirnseite (S1) dem Abstand zwischen der Magnetluftkühlungsspalt-Auslassöffnung (26) und der zweiten Rotor-Stirnseite (S2) entspricht, und/oder
▪ der Abstand zwischen der mindestens einen Magnetluftkühlungsspalt-Auslassöffnung (26) und der ersten Rotor-Stirnseite (S1) kleiner ist als der Abstand zwischen der mindestens einen Magnetluftkühlungsspalt-Auslassöffnung (26) und der zweiten Rotor-Stirnseite (S2), und/oder
o angrenzend zu der ersten oder zweiten Rotor-Stirnseite (S1, S2) angeordnet ist.

4. Generatorsegment (1) nach einem der vorhergehenden Ansprüche 1 bis 3, wobei
- die mindestens eine Magnetluftkühlungsspalt-Einlassöffnung (27)
∘ als Durchgangsöffnung und/oder Durchgangsbohrung ausgebildet ist, und/oder
∘ als ringförmiger oder teilringförmiger Spalt ausgebildet ist; und/oder
- die mindestens eine Magnetluftkühlungsspalt-Auslassöffnung (26)
∘ als Durchgangsöffnung und/oder Durchgangsbohrung ausgebildet ist, und/oder
∘ als ringförmiger oder teilringförmiger Spalt ausgebildet ist.

5. Generatorsegment (1) nach einem der vorhergehenden Ansprüche 1 bis 4, umfassend
- mehrere in Umfangsrichtung (U) und/oder in Axialrichtung (A) beabstandet zueinander angeordnete Magnetluftkühlungsspalt-Einlassöffnungen (27); und/oder
- mehrere in Umfangsrichtung (U) und/oder in Axialrichtung (A) beabstandet zueinander angeordnete Magnetluftkühlungsspalt-Auslassöffnungen (26).

6. Generatorsegment (1) nach dem vorhergehenden Anspruch 5, wobei
- die Magnetluftkühlungsspalt-Einlassöffnungen (27) in Umfangsrichtung (U) und/oder Axialrichtung (A) äquidistant zueinander angeordnet sind, und/oder
- die Magnetluftkühlungsspalt-Auslassöffnungen (26) in Umfangsrichtung (U) und/oder Axialrichtung (A) äquidistant zueinander angeordnet sind.

7. Generatorsegment (1) nach einem der vorhergehenden Ansprüche 1 bis 6, wobei
- der Abstand zwischen der jeweiligen Magnetluftkühlungsspalt-Einlassöffnung (27) und der ersten Rotor-Stirnseite (S1)
∘ gleich ist oder
∘ bei mindestens zwei Magnetluftkühlungsspalt-Einlassöffnungen (27) verschieden ist; und/oder
- der Abstand zwischen der jeweiligen Magnetluftkühlungsspalt-Auslassöffnung (26) und der ersten Rotor-Stirnseite (S1)
∘ gleich ist oder
∘ bei mindestens zwei Magnetluftkühlungsspalt-Auslassöffnungen (26) verschieden ist.

8. Generatorsegment (1) nach einem der vorhergehenden Ansprüche 1 bis 7, wobei
- der Durchmesser der Magnetluftkühlungsspalt-Einlassöffnungen (27) identisch ist oder der Durchmesser bei mindestens zwei Magnetluftkühlungsspalt-Einlassöffnungen (27) verschieden ist; und/oder
- der Durchmesser der Magnetluftkühlungsspalt-Auslassöffnungen (26) identisch ist oder der Durchmesser bei mindestens zwei Magnetluftkühlungsspalt-Auslassöffnungen (26) verschieden ist.

9. Generatorsegment (1) nach einem der vorhergehenden Ansprüche 1 bis 8, umfassend mindestens einen Drosselstopfen (50), wobei der mindestens eine Drosselstopfen (50) in der mindestens einen Magnetluftkühlungsspalt-Einlassöffnung (27) angeordnet ist.

10. Generatorsegment (1) nach dem vorhergehenden Anspruch 9, wobei der mindestens eine Drosselstopfen (50) einen Drosselhohlkörper (51) umfasst, der als Hohlzylinder einen Drosselkanal (52) ausbildet, der sich in einer Längsrichtung (L) zwischen einer ersten und zweiten Drossel-Stirnseite (53, 54) erstreckt und der Hohlzylinder eine Hohlzylinderwand (55) aufweist, die sich orthogonal zur Längsrichtung in Radialrichtung (R) zwischen einer Drossel-Innenwandfläche (55I) und einer Drossel-Außenwandfläche (55A) mit einer Wandstärke erstreckt.

11. Generatorsegment (1) nach dem vorhergehenden Anspruch 10, wobei der mindestens eine Drosselstopfen (50) an der ersten Drossel-Stirnseite (53) einen Stützring (56) aufweist, der einen Außendurchmesser aufweist, der größer ist als ein Außendurchmesser der Drossel-Außenwandfläche (55A).

12. Generatorsegment (1) nach einem der vorhergehenden Ansprüche 10 bis 11, wobei der mindestens eine Drosselstopfen (50) an der Drossel-Außenwandfläche (55A) mindestens einen ringförmigen und/oder spiralförmigen Vorsprung aufweist, wobei der mindestens eine Vorsprung (57) vorzugsweise ein Gewinde und/oder Lamellen umfasst oder ist.

13. Generator (103) für eine Windenergieanlage (100) umfassend mindestens ein Generatorsegment (1) nach einem der vorhergehenden Ansprüche 1 bis 12.

14. Windenergieanlage (100) umfassend mindestens ein Generatorsegment (1) nach einem der vorhergehenden Ansprüche 1 bis 12 und/oder einen Generator (103) nach dem vorhergehenden Anspruch 13.

15. Verwendung mindestens eines Drosselstopfens in einem Generatorsegment (1) nach einem der vorhergehenden Ansprüche 1 bis 12 oder einem Generator (103) nach dem vorhergehenden Anspruch 13, wobei mindestens ein Drosselstopfen (50) in mindestens einer Magnetluftkühlungsspalt-Einlassöffnung (27) angeordnet ist.

16. Verwendung des Drosselstopfens nach dem vorhergehenden Anspruch 15, wobei der Drosselstopfen (50) gemäß dem Drosselstopfen (50) des Generatorsegments nach einem der vorhergehenden Ansprüche 9 bis 12 ausgebildet ist.
